# EUROPEAN PATENT APPLICATION

(11) **EP 0 647 483 A1**
(43) Date of publication of application: **12.04.1995**
(21) Application number: 94202590.9
(22) Date of filing: 08.09.1994
(51) Int. Cl.: B09C 1/02

(54) **Method and device for the purification of polluted sedimentary material**

(30) Priority: 08.09.1993 NL 9301555
(71) Applicant: Mosmans, Saskia, NL-5342 GD Oss (NL)
(72) Inventor: Mosmans, Saskia, NL-5342 GD Oss (NL); Mosmans, Casper, NL-5347 KD Oss (NL)
(74) Representative: Van Someren, Petronella F. H. M.

(57) **Abstract**

The invention relates to a method for cleaning contaminated aquatic soil material, in particular dredged material, comprising of separating the aquatic soil material into at least one sand fraction and at least one sludge fraction and subsequently separating the contaminants from both the sand fraction and the sludge fraction. Separation of the aquatic soil material into a sand fraction (11) and sludge fraction (10) preferably takes place by means of at least one hydrocyclone (9) and, after separation of the sludge fraction (10), the sand fraction (11) is guided over a jig (12). The contaminants can be separated from the fractions by means of specific flotation (19,26,27) techniques.

The invention further relates to a device for performing the method and to the use of the sludge and/or sand obtained with the method.

## Description

The present invention relates to a method and device for cleaning contaminated aquatic soil material, in particular dredged materials from for instance harbours and rivers.

The contamination of the sediments of important rivers, estuaries and coastal waters in Europe is a significant environmental problem in respect of aquatic ecosystems, public health and drinking water supply. In addition, contaminated sediments likewise represent a threat to surface water and groundwater. Dangerous substances form a particular threat during upkeep operations such as dredging. An additional problem is that of dealing with dredged contaminated sediments. In many cases it is not possible to dump the sediments on land or at sea because of the level of contamination. Specific storage sites often have a limited capacity while the total cost of prolonged storage is becoming unacceptably high. There is in addition a growing resistance among the public to the building of new storage sites. Alternatives to storage and dumping are therefore desired.

The separation of contaminated aquatic soil material into a contaminated fraction on the one hand and a clean re-usable fraction on the other is therefore very important. At the moment only a few such techniques are known which operate at an acceptable cost level. In addition a relatively large contaminated fraction still results with such methods which must in turn be dumped, stored or further processed.

Aquatic soil material has a composition with a grain size distribution from gravel to clay. The gravel fraction hereof has a grain size of roughly larger than 2 mm, the sand lies between 2 and roughly 0.050 mm (also the frequently found limit value of 0.063 mm), the silt (this is partly fine sand) has a size between 0.050 and 0.002 mm, while the fraction with the finest grain size, the lutum, is smaller than 0.002 mm. In the known cleaning art for dredged material the finest fractions such as silt and lutum, or only the lutum, are not cleaned or these finest fractions of the dredged material or the sludge are separated but not further cleaned. These fractions are then stored as contaminated concentrate. Because dredged material contains a relatively large amount of this fine material the volume of this contaminated fraction can become very large.

It is the object of the present invention to provide a method with which cleaning of contaminated aquatic soil material, in particular dredged material, is achieved and whereby the volume of the contamination concentrate remaining after cleaning is as small as possible.

To this end the invention provides a method for cleaning contaminated aquatic soil material comprising of separating the material into at least one sand fraction and at least one sludge fraction and subsequently separating the contaminants from both the sand fraction and the sludge fraction. Understood here by sand fraction is bed material with a grain size of more than about 16 µm. Meant by sludge fraction is the material having a grain size of less than about 16 µm. A part of the silt and all the lutum is included herein. According to the invention both fractions are therefore wholly cleaned.

Contaminants have a particular tendency to accumulate in the sludge fraction. The known art views this sludge fraction as contaminated fraction which, after de-watering, is often stored, dumped or further processed in its entirety. When the sludge fraction is further cleaned, the finest fraction of all, the lutum, will first be removed therefrom for instance by means of hydrocyclones. The sand fraction is generally considered to be the only clean fraction.

The advantage of the present invention is now that by also cleaning the entire sludge fraction the quantity of contaminated material can be markedly reduced, because the contamination is concentrated and the cleaned sludge can be re-used. A clean sand fraction, a clean sludge fraction and a contamination concentrate then remain after the treatment. The volume of the contamination concentrate is markedly smaller than the volume of the contaminated sludge fraction.

Because the method according to the invention preferably assumes a cleaning of only two different fractions, sand and sludge, the method requires few process steps and is therefore simple and inexpensive. If necessary however, it is also possible to separate the dredged material into more than two different fractions.

After separation of the aquatic soil material into at least one sand fraction and at least one sludge fraction, for instance by means of a hydrocyclone or a jig, both the sand fraction and the sludge fraction are subjected to flotation techniques. In these techniques a slurry is made of the sand with a relatively high solid content and of sludge (that is, the fraction with the finest grain size of < 16 µm) with a relatively low solid content and a number of flotation agents are added to both slurries and thoroughly mixed therewith. Finely dispersed air bubbles are then introduced into the slurry. Hydrophobic particles and droplets, including the contaminants, adhere to the air bubbles and float to the surface where they form a foam layer which is removed. The slurry which remains behind is then clean.

According to the invention it is recommended to flotate by means of adding to the fraction for cleaning water in which air is dissolved under a pressure of for instance 6-8 bar. The air dissolved in this water is then released and precipitates on the (hydrophobic) particles for removal. The particles with the air bubbles precipitated thereon will then float. This is per se a known method, so-called Dissolved Air Flotation, which is however only used for non-selective cleaning of water. According to the invention however this technique can now be applied to selectively flotate the very fine contaminants out of the sludge fraction.

Another aspect according to the invention relates to the use of additives which are used as carriers for the removal of dissolved contaminants, such as some pesticides on the basis of organochlorine compounds, phosphoric acid esters and heavy metals. Dissolved contaminants can themselves not be flotated. However, by causing them to be absorbed on such carriers, which can be flotated, they can nevertheless be removed. Active carbon can for instance be used as carrier for organic dissolved contaminants. Zeolites and chelates like EDTA or ion exchange material are very suitable for absorption of metals.

Prior to the flotation treatment of the sand fraction, or instead of it, the sand fraction can be treated in a jig. This is a device on which the sand forms a bed through which pulsates a vertical water stream. During each up and downward pulse movement the particles with a small specific weight tend to move to the top part of the layer. The heavier sand fraction moves to the bottom part and finally falls through a coarse screen and a bed of heavier grains onto screen gauze. The fine fractions, about < 16 µm, can only be cleaned by flotation.

The process conditions of the flotation will differ per case. Characteristic of the method however is that relatively small amounts of flotation agents can be used, that is, roughly 0.1 - 1 g/kg dry solid. Flotation chemicals comprise collectors such as xanthates, thiophosphates and oils, foaming agents such as polyglycols and higher alcohols, in addition to activators, depressors, modifiers and, as additional aids, adsorbents. The pH of the fraction for flotating preferably lies between 7 and 10. The dosage and/or combination of the chemicals can be adapted in accordance with the nature of the contamination. The conditioning time, that is, the time for which the chemicals are mixed with the fraction for flotation, generally amounts to more than 15 minutes. The flotation time itself depends on the required degree of cleaning, but will preferably amount to more than 15 minutes. The solid percentage of the sludge slurry (< 16 µm) for flotation preferably lies between 0 and 15% by weight and is preferably less than 10% by weight. For the sand fraction (> 16 µm) 20-40% by weight applies here.

During the separation of the flotation foam with contaminants a comparatively large amount of water and sludge is often also separated. It is therefore recommended to again flotate the flotation foam at least once more. Hereby created is a contaminated concentrate which is further de-watered and which can finally be disposed of as a filter cake. The water separated in these subsequent steps is fed back again to the beginning of the process.

The end products of the method according to the invention consist of cleaned sand and sludge on the one hand and a concentrate of contaminants on the other. A large part of the organic material and the contaminants are removed from the sand and sludge. By mixing sand and sludge in a determined ratio and concentrating them by evaporation a product is obtained which can serve as raw material for the ceramic industry. It can also be used in road construction and for instance in noise-protection dams, dike bodies and as covering soil on waste dumps. When the sand and sludge are not mixed the sand, which complies with determined legal requirements, can be used wherever sand is needed. The sludge concentrated by evaporation forms a clay which can for instance be mixed with composted vegetable, fruit and garden waste and can be used as fertile ground. The concentrate contains the greater part of the contaminants and consists of 40-80% organic material. This concentrate can for instance be further processed by means of wet oxidation/pyrolysis, burning or vitrification, or methanizing or fermenting or biodegrading. The present invention in this way provides a method with which the quantity of contaminated material resulting after separation of aquatic soil material, in particular dredged material, can be reduced completely into a clean and contaminated fraction. The end products of the method, that is, clean sand and clean sludge, can be further used for diverse applications. The contamination concentrate, which has a comparatively much smaller volume than contaminated sludge resulting from use of the known separating methods, takes up less space during both storage and transport, and can optionally be further processed.

The invention further relates to a device for performing the method according to the invention. Such a device comprises at least means for separating the material for treating into a sludge fraction and a sand fraction and means for removing the contaminants from both fractions by means of flotation techniques, such as flotation cells. In addition, different screens, such as vibrating screens or static screens, and also jigs can be added to the device as well as storage tanks, pumps and feed and discharge lines.

Because operations take place with a relatively short processing time and, for the sludge fraction, with a low solids percentage, the invention also proposes a new type of flotation cell. In this new type of flotation cell the sludge slurry (< 16 µm) is pumped round instead of being mixed with stirring gear. The pressure pipe is provided with different spray pipes with which air is mixed under pressure with the water and dissolved in the water.

The invention will be further illustrated with reference to the annexed drawings, in which:

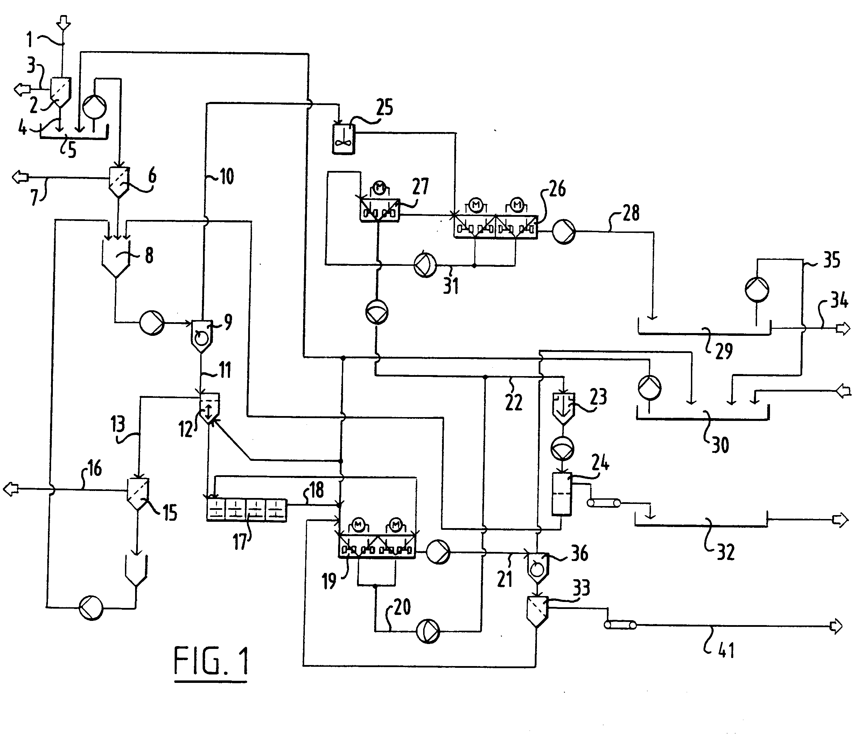

Fig. 1 is a schematic diagram of an embodiment of a device according to the invention;
Fig. 2 shows an embodiment of the new type of flotation cell according to the invention. Herein:
Fig. 2a is a longitudinal section of the flotation cell;
Fig. 2b is a top view of the flotation cell; and
Fig. 2c is a cross section of the flotation cell; and
Fig. 3 is a perspective view of the flotation cell of fig. 2.

The material 1 is fed to a screen 2 where a first coarse separation takes place into stones and the like 3 and finer material (sand and sludge) 4. The screened contaminated material falls into a tank 5 and is guided therefrom to a following screen 6 where smaller stones 7 such as gravel are removed. The screened material collects in a tank 8 and is subsequently guided through one or more hydrocyclones 9. The overflow 10 of the cyclone consists of contaminated sludge 10. The underflow consists of contaminated sand 11. In practice a number of hydrocyclones will virtually always be used. The sand falls onto a jig 12. Light material is herewith collected in the upper flow 13 and relatively heavy material (sand) in the lower flow 14. Most of the contaminants such as polyaromatic hydrocarbons (PAH) and contaminated humus are lighter than sand and will therefore be concentrated in the upper flow 13, while the greater part of the sand will collect in the lower flow. Upper flow 13 is subsequently guided through a stationary screen 15 in which all particles of for instance larger than 0.5 mm are separated from the flow. The fine particles are fed back to the supply tank 8 of hydrocyclone 9. The coarse particles larger than 0.5 mm form a humus-rich fraction 16. The latter will, like the flotation concentrate, be further processed by for example oxidation/pyrolysis.

The lower flow 14 of the jig 12 is guided to an attrition mill 17 wherein the slurry is subjected to an intensive scouring treatment. All contaminants adhering to the sand grains are scoured loose here. In this phase flotation chemicals which act specifically on the contaminants can also be added so that the contaminants can be flotated in a subsequent flotation phase. The scoured sand slurry 18, which consists of sand grains, water and contaminants which have been scoured loose, flows to a flotation unit 19 in which the slurry is mixed with small air bubbles. The air bubbles adhere to the contaminants and rise to the surface, there to form a foam layer. The foam layer contains the contaminants and is added to the foam layer 22 resulting from the flotation of the sludge. The combination of both contaminated foam layers is guided to a separator 23 in which the solids settle. The sludge concentrated by evaporation is then taken out of the separator and carried to a filter 24 in which it is de-watered to a comparatively dry cake. This filter cake can subsequently be collected in a storage tank 32 and transported for further treatment.

For de-watering, the sand slurry or the sand-water mix 21 is guided once again through a cyclone 36 and then over a de-watering screen 33. Thereafter the sand 41 is suitable for re-use.

The foam layer 22 results from the flotation of the sludge. During this flotation the upper flow of the hydrocyclone 9 is guided to a conditioning tank 25 where flotation chemicals are added with thorough stirring. The conditioned slurry is intimately mixed in a first flotation unit 26 with finely dispersed air bubbles. The hydrophobic contaminants adhere to the small bubbles and float to the surface on which they form a foam layer 31. The remaining sludge slurry 28 is clean and is stored in a device for concentrating by evaporation or a settling basin 29. Coagulation and flocculation agents are added herein to increase the settling speed of the sludge particles. The slurry is pumped into the buffer tank at the one outer end while at the other outer end a clean water layer 35 is formed which is pumped into a water buffer tank 30 and can be used again in the process. The foam layer 31 created in the first flotation unit 26 still contains a large quantity of clean sludge particles and is therefore subjected once again to a flotation treatment in a second flotation unit 27. The foam layer 22 resulting herein is collected together with the foam layer from the sand flotation and further processed as described above.

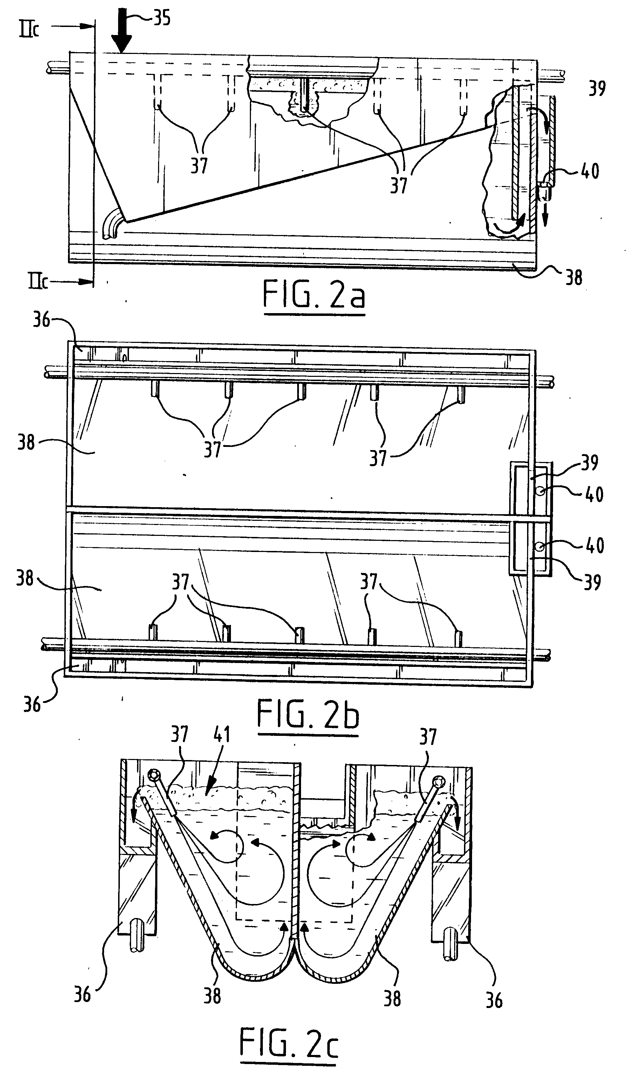

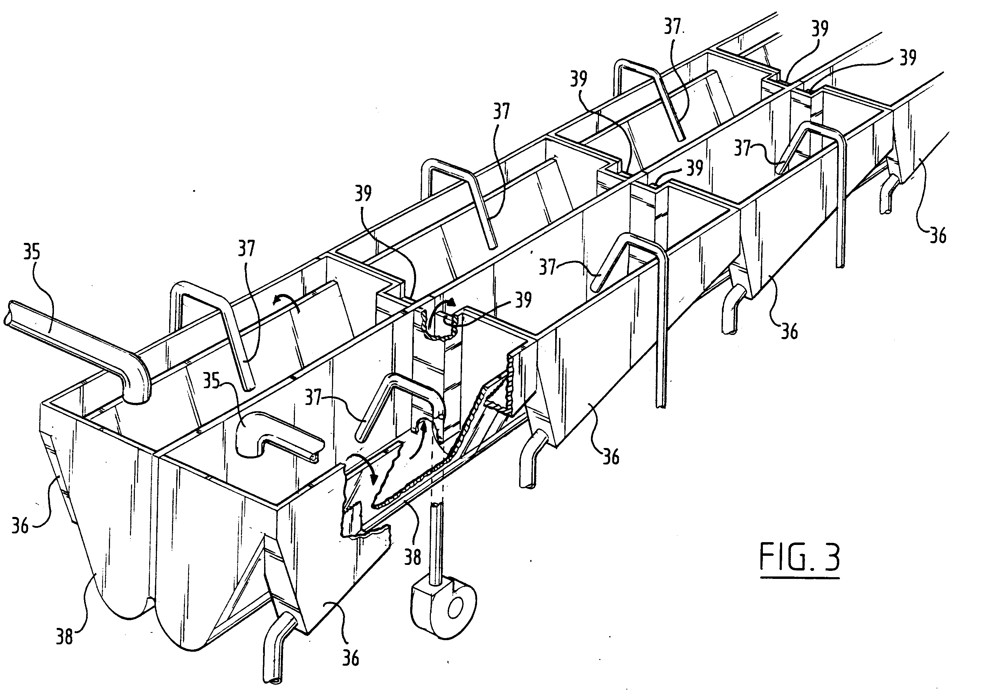

In fig. 2 is shown the new type of flotation cell according to the invention. Fig. 2a is a schematic longitudinal section of the flotation cell. At arrow 35 the slurry for treatment is carried into the treatment tank 38. In spray pipes 37 air is mixed under pressure with slurry. The foam created by this treatment overflows into the foam collecting tank 36. The device can likewise be equipped with a skimming mechanism (not shown) for the foam. Situated in the tank is an overflow 39 and an outlet 40 by means of which the slurry which runs from left to right through the tank is discharged. Fig. 2b and 2c and fig. 3 with respectively a top view, a cross section and a perspective view elucidate the principle of the flotation cell. Like components are correspondingly numbered in the different figures.

## Claims

1. Method for cleaning contaminated aquatic soil material, such as dredged material, comprising of separating the aquatic soil material into at least one sand fraction and at least one sludge fraction and subsequently separating the contaminants from both the sand fraction and the entire sludge fraction.

2. Method as claimed in claim 1, **characterized in** **that** separation of the aquatic soil material into a sand fraction and a sludge fraction takes place by means of at least one hydrocyclone.

3. Method as claimed in claim 1 or 2, **characterized in that** after separation of the sludge fraction the sand fraction is guided over a jig for separating of organic material and contaminants with a lower density than sand.

4. Method as claimed in any of the foregoing claims, **characterized in that** the contaminants of the sand and sludge fraction are separated by means of specific flotation techniques.

5. Method as claimed in claim 4, **characterized in that** the specific flotation technique applied for cleaning the sludge fraction consists of precipitating air onto the contaminants by adding to a slurry of the fraction for flotation water and/or slurry in which air is dissolved under pressure.

6. Method as claimed in claim 5, **characterized in that** the fractions are flotated for at least 15 minutes.

7. Method as claimed in claim 4, 5 or 6, **characterized in that** the solid content of the sludge fraction for flotation lies between 0 and 15% and preferably amounts to less than 10%.

8. Method as claimed in claim 4, 5, 6 or 7, **characterized in that** prior to the flotation the fractions are conditioned with flotation agents.

9. Method as claimed in claim 8, **characterized in that** the flotation agents are chosen from collectors, foaming agents, (pH) modifiers and activators or combinations thereof.

10. Method as claimed in claim 8 or 9, **characterized in that** the pH of the fractions lies between 7 and 10 after conditioning.

11. Method as claimed in claim 10, **characterized in that** conditioning takes place for at least 15 minutes.

12. Device for performing the method as claimed in any of the foregoing claims comprising means for separating the aquatic soil material for treatment into fractions and means for separating the contaminants from the fractions.

13. Device as claimed in claim 12, further comprising a jig for separating the sand fraction into sub-fractions prior to flotation.

14. Device as claimed in claim 11 or 12, further comprising an attrition mill for removing contaminants from the sand grains.

15. Device as claimed in claim 12, 13 or 14, further comprising at least one screen for removing coarse parts from the aquatic soil material.

16. Device as claimed in any of the claims 12-15, **characterized in that** the means for separating contaminants from the fractions are formed by a flotation cell.

17. Device as claimed in claim 16, **characterized in that** the flotation cell consists of a container for a slurry formed by addition of water to the fraction for flotation, spray pipes for carrying into the container water and/or slurry into which air is dissolved under pressure, tanks for collecting foam formed by flotation in the cell, an overflow and means for draining cleaned slurry out of the container.

18. Device as claimed in claim 17, **characterized in that** the device is further provided with means for skimming the formed foam.

19. Use of sludge and/or sand cleaned by means of the method as claimed in any of the claims 1-11 as raw material for the ceramic industry.

20. Use of sludge and/or sand cleaned by means of the method as claimed in any of the claims 1-11 as raw material and/or filler material in road construction and in hydraulic engineering.
